# EUROPEAN PATENT APPLICATION

(11) **EP 4 814 371 A1**
(43) Date of publication of application: **30.09.2026**
(21) Application number: 24893585.0
(22) Date of filing: 22.11.2024
(51) Int. Cl.: F21V 8/00, F21V 19/00

(54) **SIDE-EMITTING DEVICE AND LAMP**

(30) Priority: 23.11.2023 CN 202323184134 U
(71) Applicant: Opple Lighting Co., Ltd., Shanghai 201201 (CN); Suzhou Opple Lighting Co., Ltd., Suzhou, Jiangsu 215211 (CN)
(72) Inventor: LIU, Haisheng, Shanghai 200120 (CN); LIU, Chaobo, Shanghai 200120 (CN); HU, Haiqiang, Shanghai 200120 (CN); YANG, Xiaotong, Shanghai 200120 (CN); LIU, Zheng, Shanghai 200120 (CN)
(74) Representative: Winter, Brandl - Partnerschaft mbB
(86) International application number: PCT/CN2024/133848
(87) International publication number: WO 2025/108431

(57) **Abstract**

A side-emitting device (300) and a lamp (100). The side-emitting device comprises a frame (620) extending in a vertical direction, and a light source module (310) and a light exit member (321) provided on the inner side of the frame (620); the light source module (310) is arranged between the frame (620) and the light exit member (321), and emits light towards the light exit member (321); a light exit region (301) is formed on the light exit member (321); a non-light-exit region (302) adjacent to the light exit region (301) is further provided on the light exit member (321); the light exit region (301) is connected to the non-light-exit region (302) in the circumferential direction so as to form a closed annular surface on the inner side of the light exit member (321).

## Description

This application claims the priority of Chinese patent application No. 202323184134.7, filed on November 23, 2023, entitled "Side Light-Emitting Device and Luminaire", the entire contents of which are incorporated herein by reference.

### TECHNICAL FIELD

The present application relates to the field of lighting, and in particular to a side light-emitting device and a luminaire.

### BACKGROUND

With the improvement of living standards, people's demands for lighting in different scenarios are also increasing. Among them, luminaires capable of simulating outdoor natural ambient light are gradually gaining market favor and are widely used in indoor lighting such as homes, office buildings, shopping malls, stadiums, railway stations, airports, etc. Traditional blue-sky luminaires generally consist of a light source and a pattern plate painted with blue sky and white clouds, and the light source illuminates the pattern plate to form an outdoor blue-sky light environment. However, such solutions cannot truly present the matching effect of blue sky and sunlight, have poor layering, lack a three-dimensional sense, and have unsatisfactory simulation fidelity.

In this regard, blue-sky luminaire designs using a light source combined with a scattering panel have appeared on the market, forming a light similar to natural sunlight. When real sunlight enters a room through a window, it illuminates one side edge of the window.

In view of this, it is indeed necessary to provide a side light-emitting device and a luminaire capable of simulating the effect of sunlight illuminating one side edge of a window.

### SUMMARY

An object of the present application is to provide a side light-emitting device capable of simulating the effect of sunlight illuminating one side edge of a window.

To achieve the above object, the present application provides a side light-emitting device, applied to a luminaire, including a frame extending in a vertical direction, and a light source module and a light-exit member disposed on an inner side of the frame, where the light source module is disposed between the frame and the light-exit member and emits light toward the light-exit member to form a light-exit region on the light-exit member, and the light-exit region and a non-light-exit region are connected in a circumferential direction so as to form a closed annular surface on an inner side of the light-exit member.

As a further improvement of the present application, a light/shadow transition region is formed between the non-light-exit region and the light-exit region.

As a further improvement of the present application, the light source module includes a light source substrate surrounding the light-exit member and a light-emitting element disposed on the light source substrate, the light-emitting element is disposed on a side of the light source substrate facing the light-exit member, and the light-emitting element includes different lit regions, and by controlling the lit regions of the light-emitting element, a light-exit region that is illuminated and a non-light-exit region that is not illuminated are formed on the light-exit member.

As a further improvement of the present application, the light source module includes a light source substrate surrounding the light-exit member and a light-emitting element disposed on a portion of the light source substrate, the light-emitting element is configured to form a light-exit region that is illuminated on the light-exit member, and a region of the light source substrate where the light-emitting element is not provided forms a non-light-exit region that is not illuminated on the light-exit member.

As a further improvement of the present application, the side light-emitting device includes a light shielding member, the light shielding member and the light source module jointly surround the light-exit member, the light source module is configured to form a light-exit region that is illuminated on the light-exit member, and the light shielding member is configured to form a non-light-exit region that is not illuminated on the light-exit member.

As a further improvement of the present application, the light source module further includes a light guiding lens, and the light guiding lens covers the light-emitting element.

As a further improvement of the present application, at least part of the light emitted by the light source module is projected, after exiting through the light guiding lens and the light-exit member, onto a position of the luminaire close to the light-exit region.

As a further improvement of the present application, an extension line of the light emitted by the light source module intersects an extension direction of the frame.

Another object of the present application is to provide a luminaire including the above side light-emitting device.

To achieve the above object, the present application provides a luminaire, including the above side light-emitting device and a surface light-emitting device, where the surface light-emitting device is configured to emit light outward, and the side light-emitting device is disposed to surround the surface light-emitting device.

As a further improvement of the present application, the side light-emitting device includes a frame extending in a vertical direction, and a light source module and a light-exit member disposed on an inner side of the frame, and an end of the light-exit member away from the surface light-emitting device is inclined toward the frame.

Compared with the prior art, the technical solution of the present application has the following beneficial effects: in the side light-emitting device of the present application, the light source module is disposed between the frame and the light-exit member, the structure is simple, and the light source module emits light toward the light-exit member to form a light-exit region on the light-exit member, simulating the effect of sunlight shining on one side of a window, thereby improving the user's visual experience.

### BRIEF DESCRIPTION OF DRAWINGS

Fig. 1 is a perspective structural view of a luminaire according to an embodiment of the present application.
Fig. 2 is a cross-sectional view of the luminaire shown in Fig. 1.
Fig. 3 is an exploded structural view of the luminaire shown in Fig. 1.
Fig. 4 is a schematic top view of a first light-emitting module in the luminaire shown in Fig. 3.
Fig. 5 is a schematic view of a light-emitting block in the first light-emitting module shown in Fig. 3.
Fig. 6 is a schematic view of a light source module in the luminaire shown in Fig. 3.
Fig. 7 is an exploded structural view of a side light-emitting device according to a second embodiment of the present application.
Fig. 8 is a schematic view of a light source module in Fig. 7.
Fig. 9 is an exploded structural view of a light distribution member of a side light-emitting device according to a third embodiment of the present application.
Fig. 10 is a light path diagram when the light distribution member is a lens according to the present application.
Fig. 11 is a light path diagram when the light distribution member is a decentered lens according to the present application.
Fig. 12 is a light path diagram when the light distribution member is a reflective cup according to the present application.
Fig. 13 is a light path diagram when the light distribution member is a decentered reflective cup according to the present application.
Fig. 14 is a perspective structural view of a projection device according to an embodiment of the present application.
Fig. 15 is an exploded structural view of the projection device shown in Fig. 14.
Fig. 16 is a lighting effect diagram of a luminaire according to a preferred embodiment of the present application.
Fig. 17 is a lighting effect diagram of a surface light-emitting device and a side light-emitting device of a luminaire according to a preferred embodiment of the present application.

### List of Reference Numerals:

100 - luminaire;
200 - surface light-emitting device, 201 - light-exit surface, 210 - first light-emitting module, 211 - first substrate, 212 - light-emitting block, 2121 - first light-emitting unit, 2122 - second light-emitting unit, 220 - diffusion structure, 240 - transparent plate, 250 - inner frame;
300 - side light-emitting device, 301 - light-exit region, 302 - non-light-exit region, 303 - virtual image, 304 - light/shadow transition region, 310 - light source module, 311 - light source substrate, 312 - light-emitting element, 320 - light guide assembly, 321 - light-exit member, 322 - light distribution member, 3221 - fine structure, 323 - reflective member, 324 - light shielding member, 325 - light guiding lens, 326 - prism sheet;
400 - projection system, 410 - projection device, 420 - light-emitting assembly, 421 - aluminum substrate, 422 - lamp bead, 430 - lens assembly, 431 - first lens, 432 - second lens, 433 - third lens, 451 - first lens barrel, 452 - second lens barrel, 453 - third lens barrel, 440 - aperture stop;
500 - mounting system;
600 - housing, 610 - bottom wall, 620 - frame.

### DETAILED DESCRIPTION

In order to make the objectives, technical solutions, and advantages of the present application clearer, the present application is described in detail below with reference to the accompanying drawings and specific embodiments.

It should be noted that, in order to avoid obscuring the present application with unnecessary detail, only structures and/or processing steps closely related to the solution of the present application are shown in the drawings, while other details not closely related to the present application are omitted.

In addition, it should also be noted that the terms "comprise," "include," or any other variations thereof are intended to cover non-exclusive inclusion, such that a process, method, article, or device that includes a series of elements includes not only those elements but also other elements not expressly listed, or also includes elements inherent to such process, method, article, or device.

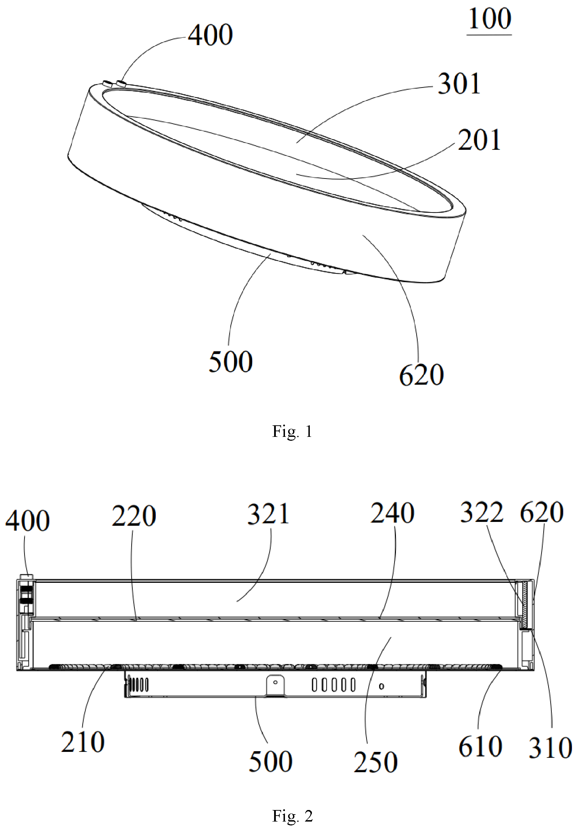

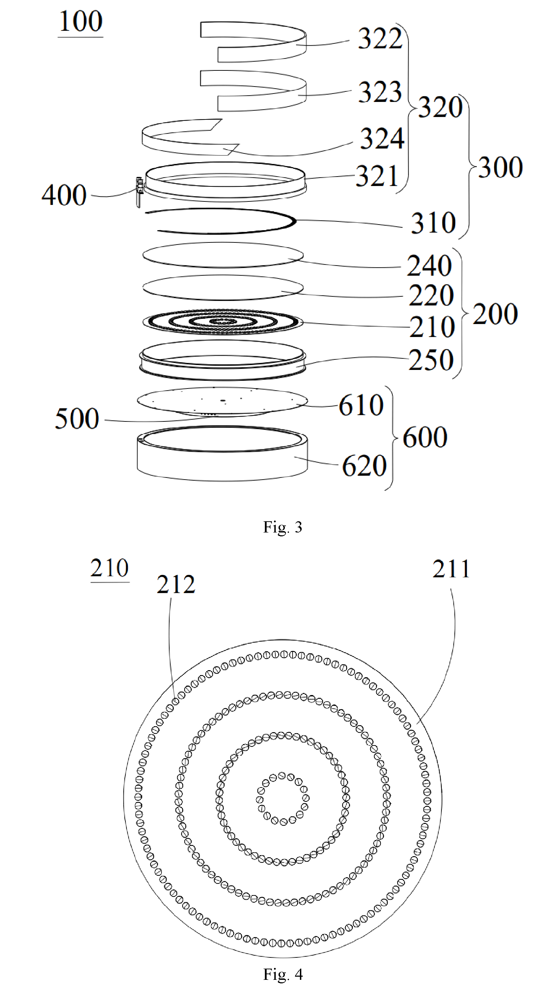

Referring to Figs. 1-3, a luminaire 100 according to a preferred embodiment of the present application includes a surface light-emitting device 200, a side light-emitting device 300, and a projection system 400. The surface light-emitting device 200 is configured to simulate sunlight at different times in the natural world. The side light-emitting device 300 is disposed around the outer side of the surface light-emitting device 200 and is configured to simulate the effect of sunlight shining on an edge of a skylight. In addition, the side light-emitting device 300 can also form a virtual image 303 in the surface light-emitting device 200. The projection system 400 is disposed at a side of the side light-emitting device 300 and is configured to form a light spot on the ground or a wall.

The luminaire 100 includes a housing 600. The housing 600 includes a bottom wall 610 and a frame 620 extending from the bottom wall 610 in a direction away from the bottom wall 610. A light-exit opening is formed between the bottom wall 610 and the frame 620. The surface light-emitting device 200 includes a first light-emitting module 210 and a diffusion structure 220. The first light-emitting module 210 is fixedly connected to the bottom wall 610, and the first light-emitting module 210 is configured to emit light toward the diffusion structure 220. The diffusion structure 220 is installed in the frame 620 and covers the first light-emitting module 210. The diffusion structure 220 is configured to homogenize the light emitted by the first light-emitting module 210.

In an optional embodiment, the surface light-emitting device 200 is a ceiling lamp, including a chassis, a cover, and the first light-emitting module 210. The first light-emitting module 210 is a full-spectrum LED chip capable of simulating a daylight spectrum. In other embodiments, the first light-emitting module 210 may also be a conventional white light source, and nanoparticles are added into the diffusion structure 220 of the surface light-emitting device 200 to form Rayleigh scattering, so that the light-exit surface 201 appears blue like the sky. The present application does not limit this.

Referring to Figs. 2 to 5, in a preferred embodiment of the present application, the surface light-emitting device 200 includes a first light-emitting module 210 and a diffusion structure 220. The first light-emitting module 210 includes a first substrate 211 and a plurality of light-emitting blocks 212. The first substrate 211 is fixedly connected to the bottom wall 610. The light-emitting blocks 212 are mounted on a side of the first substrate 211 facing away from the bottom wall 610 and are electrically connected through the first substrate 211.

The light-emitting block 212 includes at least two types of light-emitting units, and the at least two types of light-emitting units are capable of emitting light of at least two spectra. The at least two types of light-emitting units are arranged in an alternating manner, and adjacent light-emitting units of the same type are arranged in opposite orientations.

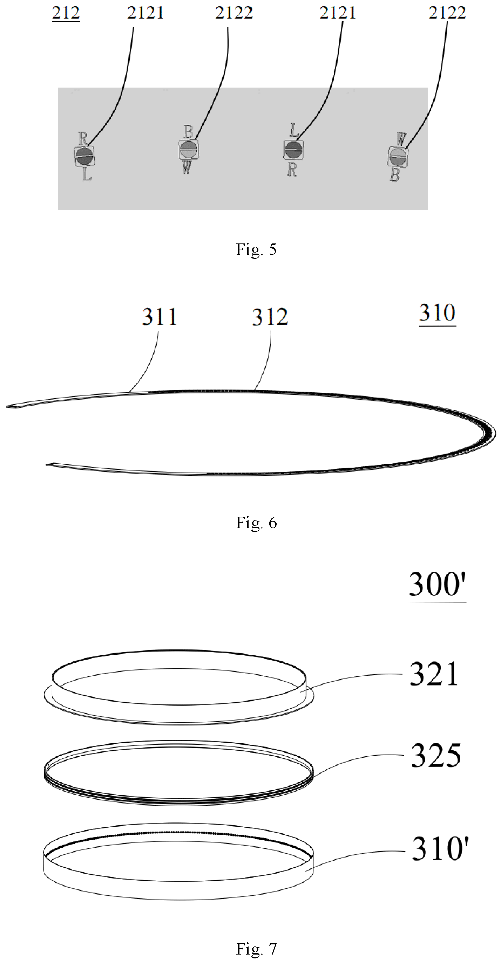

Referring to Fig. 5, in a preferred embodiment, each light-emitting block 212 on the first light-emitting module 210 includes a first light-emitting unit 2121 and a second light-emitting unit 2122, where the first light-emitting units 2121 and the second light-emitting units 2122 are arranged in an alternating manner, and two adjacent first light-emitting units 2121 or two adjacent second light-emitting units 2122 are arranged in opposite orientations. The first light-emitting unit 2121 includes any two of four light-emitting chips of different colors, and the second light-emitting unit 2122 includes the remaining two of the four light-emitting chips of different colors. In a single light-emitting block, from left to right, there are sequentially a first light-emitting unit 2121, a second light-emitting unit 2122, a first light-emitting unit 2121, and a second light-emitting unit 2122. The two different types of light-emitting units, i.e., the first light-emitting unit 2121 and the second light-emitting unit 2122, are arranged in an alternating manner, while adjacent first light-emitting units 2121 or adjacent second light-emitting units 2122 are arranged in opposite orientations. Through these four light-emitting chips of different colors, different lighting effects can be achieved, and by arranging different types of light-emitting units alternately and arranging the same type of light-emitting units in opposite orientations, the color of light emitted by the surface light-emitting device 200 is more uniform, and the color of sunlight at different times can be simulated, thereby achieving a dynamic lighting effect.

In this embodiment, each light-emitting block includes two first light-emitting units 2121 and two second light-emitting units 2122. In other embodiments, the count of first light-emitting units 2121 and second light-emitting units 2122 included in the light-emitting block 212 may be larger, which is not limited by the present application.

A light source lens (not shown in the figures) is further sleeved on the light-emitting units of the light-emitting block. In this embodiment, a light source lens is installed on each light-emitting unit, i.e., the light source lenses and the light-emitting units are arranged in a one-to-one correspondence. Such an arrangement allows the light emitted by the light-emitting units to be concentrated toward the center of the light source lens and then emitted outward, avoiding interference between the light rays. In other embodiments, the light source lens may also be a multi-in-one lens such as a two-in-one or four-in-one lens, so that a single light source lens may cover more light-emitting units, or may be a single light source lens covering the entire light-emitting unit, which can reduce the count of light source lenses and make production and assembly more convenient and efficient.

In this embodiment, the light-emitting units are arranged in a circular pattern on the first substrate 211. Specifically, they are arranged in multiple concentric circles, and the count of light-emitting units in each circle is a multiple of 6, 7, or 8. The count of light-emitting units in each concentric circle is determined according to the voltage of the light-emitting units and the voltage of the driving power supply. In this embodiment, the voltage of the lamp bead 422 is 3V, and the voltage of the driving power supply is 24V, so a mode of 8 in series is adopted, i.e., the count of light-emitting units in each concentric circle is a multiple of 8.

In this embodiment, there are Ri circles of light-emitting units on the first substrate 211, where i ≥ 2. The count of light-emitting units in the R1 circle is N, the count of light-emitting units in the R2 circle is 2N, and the count of light-emitting units in the Ri circle is i*N. Assuming that the R1 circle is 1 string, labeled as 1_1, the R2 circle is 2 strings, labeled as 2_1 and 2_2, and so on, and the Ri circle is labeled as i_1 to i_i, then there are i(i+1)*(i+2)/6 strings in total, which is equivalent to being able to adjust i*(i+1)*(i+2)/6 strings of pixel clusters. Since there are four light-emitting chips of different colors, 4*i*(i+1)*(i+2)/6 regions may be adjusted in various colors and brightnesses, by precisely controlling the power of the light-emitting units in different regions through a control system, a continuous change of light from morning to night can be achieved.

In other embodiments, the light-emitting units may also be distributed on the first substrate 211 in other shapes, such as a square ring shape, which is not limited by the present application.

The surface light-emitting device 200 further includes an inner frame 250 and a diffusion structure 220. The inner frame 250 is sleeved in the frame 620, and the diffusion structure 220 is fixedly connected to an end of the inner frame 250 away from the first light-emitting module 210. The light emitted by the light-emitting units in the first light-emitting module 210 passes through the diffusion structure 220, and the diffusion structure 220 diffuses the light, dividing a line light source or a point light source into a uniform surface light source. In this embodiment, the diffusion structure 220 is a diffusion plate, and the transmittance of the diffusion plate reaches 40%-65%, with a thickness of about 3 mm.

The diffusion plate may effectively eliminate the grainy feel of the light emitted from the first light-emitting module 210, and has the function of diffusing light, i.e., light is scattered on its surface, spreading the light softly and uniformly. After the light is diffused by the diffusion plate, the illumination area is larger, the light uniformity is better, and the color is stable.

In some other embodiments, the diffusion structure 220 may also be a structural member with fine structures, which also covers the light-emitting module, and the structural member with fine structures can also achieve a good light homogenizing effect, which is not limited by the present application.

In some embodiments, the surface light-emitting device 200 further includes a transparent plate 240. The transparent plate 240 is fixedly connected to an end of the inner frame 250 away from the first light-emitting module 210, and the transparent plate 240 is located on a side of the light-exit surface 201 facing away from the first light-emitting module 210. A side of the transparent plate 240 facing away from the light-exit surface 201 is a mirror surface. At least part of the light emitted by the side light-emitting device 300 is projected, after exiting from the light-exit region 301, onto the transparent plate 240, and is reflected by the transparent plate 240 to form a virtual image 303, so as to simulate a window shadow effect formed on a window when one side of the window is illuminated by sunlight, giving a sense of depth and transparency to the human eye.

The mirror surface of the transparent plate 240 has a reflectivity for light greater than its transmittance for light, thereby preventing external light from entering the transparent plate 240 through the light-exit surface. Optionally, the material of the transparent plate 240 may be an inorganic material, and the inorganic material may be quartz glass. The transparent plate 240 may also be made of an organic material, and the organic material may be a polymer transparent material such as plexiglass, which is not limited by the present application.

In some embodiments, a very thin one-way film layer, such as tin, silver, or aluminum, is plated on the light-exit surface of the transparent plate 240 by a crystal plating process to form a one-way film layer. The use of the crystal plating process may make the one-way film layer have a relatively high smoothness. In other embodiments, the transparent plate 240 may be selected according to actual conditions, which is not limited here. The thickness of the one-way film layer may be adjusted according to actual conditions. When the thickness of the one-way film layer increases, its reflectivity and transmittance change, and the effect of one-way perspective is achieved by utilizing the reflectivity being higher than the transmittance.

By controlling the brightness changes of the light-emitting units in different regions, lighting effects of different modes such as morning glow and sunset glow can be achieved.

The side light-emitting device 300 is detachably connected to the luminaire 100. The side light-emitting device 300 is disposed between the frame 620 and the surface light-emitting device 200, and surrounds the light-exit surface 201 of the surface light-emitting device 200. The side light-emitting device 300 extends along the light emission direction of the first light-emitting module 210. The side light-emitting device 300 has a light-exit region 301 attached to a side of the frame 620 close to the light-exit surface 201. The side light-emitting device 300 further includes a light source module 310. The light source module 310 is located, in a horizontal direction, between the light-exit region 301 and the frame 620. The light emitted by the light source module 310 passes through the light-exit region 301 and then exits in a direction away from the frame 620. The exiting light of the light-exit region 301 and the exiting light of the light-exit surface 201 intersect, and at the same time, the light-exit region 301 emits light obliquely downward to prevent the light emitted through the light-exit region 301 from illuminating the non-light-exit region 302 of the side light-emitting device 300. The light emission mode of the side light-emitting device 300 is different from that of conventional atmosphere lamps. The side light-emitting device 300 emits light only toward the inner side of the luminaire 100. In this embodiment, the frame 620 is made of an opaque material, thereby creating an effect of sunlight entering and illuminating the window sill, visually forming a light-transmissive window effect.

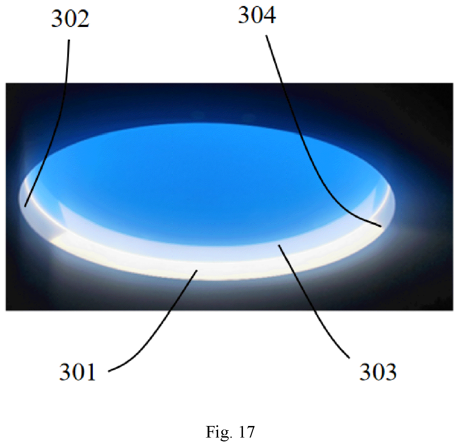

The side light-emitting device 300 further includes a non-light-exit region 302. The non-light-exit region 302 is also disposed away from the frame 620, and a light/shadow transition region 304 is formed between the non-light-exit region 302 and the light-exit region 301. As shown in Fig. 17, this simulates the effect that when sunlight enters from one side, it illuminates the window sill on that side while forming a dark surface on the other side of the window sill, making the display effect more realistic. The light-exit region 301 and the non-light-exit region 302 are connected in a circumferential direction, and together form an annular surface on the periphery of the light-exit surface 201. The light/shadow transition region 304 is located at the junction between the light-exit region 301 and the non-light-exit region 302. The function of the light/shadow transition region 304 is to form a light-and-dark boundary area between the light-exit region 301 and the non-light-exit region 302, which may be a continuously changing area from bright to dark, or may be a distinct boundary line. The side light-emitting device 300 includes a light source substrate 311 surrounding the light-exit surface 201 and a light-emitting element 312 disposed on the light source substrate 311. The light source substrate 311 includes a lit region disposed close to the light-exit region 301 and an unlit region disposed away from the light-exit region 301, so as to form the light-exit region 301 that is illuminated and the non-light-exit region 302 that is not illuminated on the periphery of the light-exit surface 201. The lit region of the light source substrate 311 is provided with the light-emitting element 312, while the unlit region may not be provided with the light-emitting element 312.

In some embodiments, the side light-emitting device 300 further includes a light shielding member 324 facing away from the light-exit region 301. The light source module 310 and the light shielding member 324 together surround the side of the light-exit surface 201 close to the frame 620, so as to form the light-exit region 301 that is illuminated and the non-light-exit region 302 that is not illuminated on the periphery of the light-exit surface 201.

The side light-emitting device 300 as a whole may be configured to rotate relative to the surface light-emitting device 200. A micro-motor provided in the luminaire 100 drives the side light-emitting device 300 to rotate, so as to better simulate the effect of the sun rising in the east and setting in the west.

The side light-emitting device 300 is described below through three specific embodiments, but it should not be limited thereto.

### Embodiment 1

As shown in Figs. 2, 3 and 6, in this embodiment, the light emission direction of the light source module 310 is identical to the light emission direction of the first light-emitting module 210. The side light-emitting device 300 includes the light source module 310 and a light guide assembly 320. The light guide assembly 320 includes a light distribution member 322 and a light-exit member 321. The light distribution member 322 is disposed below the light source module 310. The light source module 310 emits light toward the light distribution member 322 (i.e., the light source module 310 is of a direct-lit type). The light distribution member 322 is configured to refract the light emitted from the light source module 310. The light-exit member 321 is located on a side of the light distribution member 322 facing away from the frame 620. After being refracted by the light distribution member 322, the light-exiting from the light distribution member 322 then exits through the light-exit member 321 in a direction away from the frame 620. The light distribution member 322 may control the exit angle of the light, so that the light-exits at a small angle, providing a long projection distance and stronger transparency.

In some embodiments, an end of the light-exit member 321 away from the surface light-emitting device 200 is inclined toward the frame 620 by 5° to 30°, so that the light emitted from the light-exit region 301 has a wider illumination range.

In this embodiment, the light distribution member 322 is a light guide plate, and the material of the light distribution member 322 and the light-exit member 321 is a transparent optical material such as PMMA or PC. In other embodiments, the light distribution member 322 may also be an optical element of other structures or other materials, which is not limited by the present application.

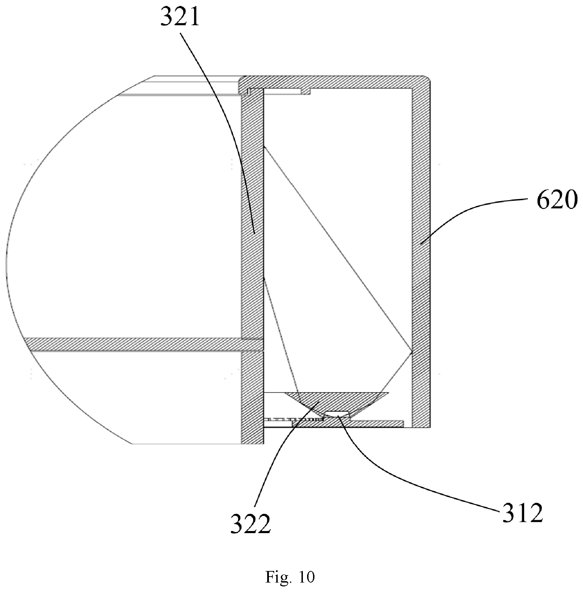

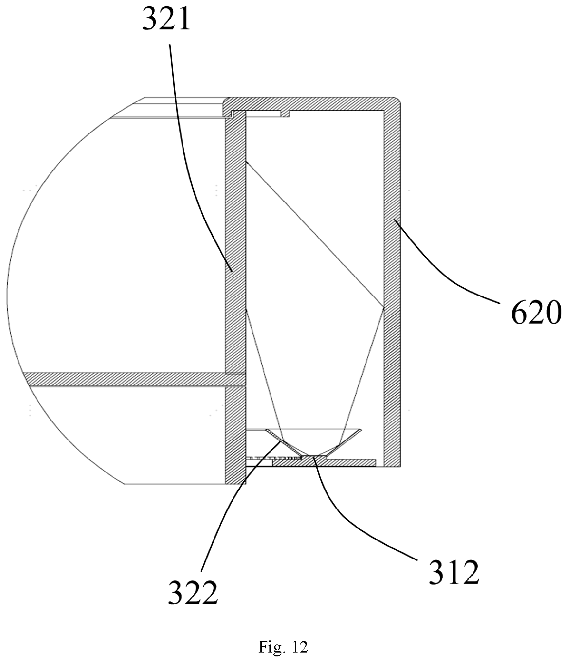

As shown in Fig. 10, in some embodiments, the light distribution member 322 is a lens, or as shown in Fig. 12, in some embodiments, the light distribution member 322 is a reflective cup. The lens or the reflective cup is located in the light emission direction of the light source module 310, and the lens or the reflective cup covers the light-emitting element 312. After the light emitted by the light-emitting element 312 is refracted by the lens or the reflective cup, part of the light exits toward the light-exit member 321, and part of the light exits toward the frame 620. A reflective member 323 is provided on a side of the frame 620 close to the light-exit member 321 to reflect the light directed to that portion. The light reflected by the reflective member 323 then exits toward the light-exit member 321.

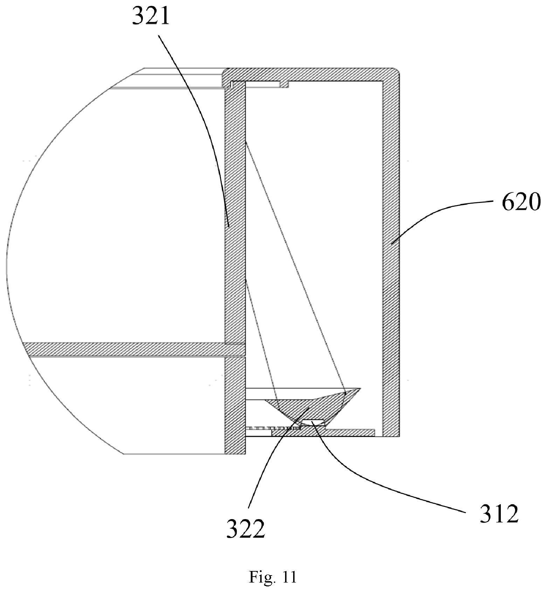

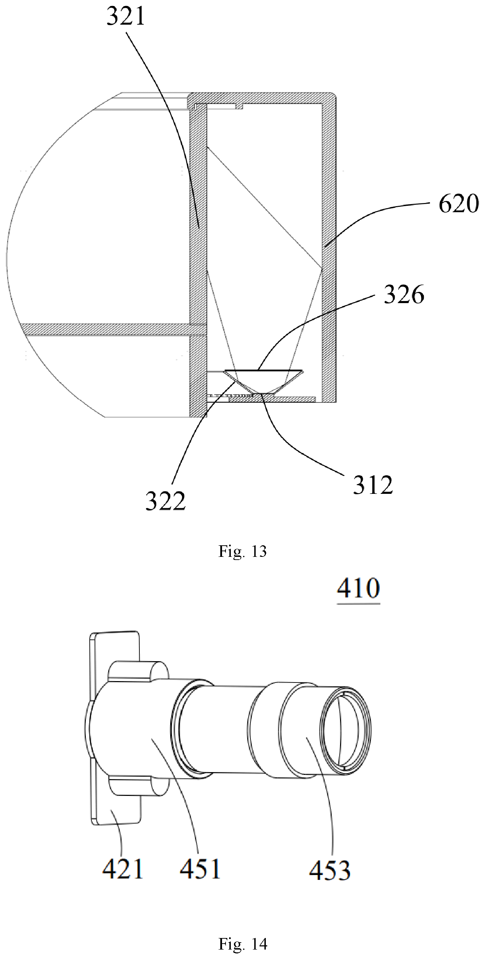

As shown in Fig. 11, in some embodiments, the light distribution member 322 is a decentered lens, or as shown in Fig. 13, in some embodiments, the light distribution member 322 is a decentered reflective cup. The decentered lens or the decentered reflective cup covers the light-emitting element 312. After the light emitted by the light-emitting element 312 is refracted by the decentered lens or the decentered reflective cup, all of the light enters the light-exit member 321 in a direction away from the frame 620. By using the decentered lens or the decentered reflective cup, there is no need to provide the reflective member 323, and the structure is further simplified.

As shown in Fig. 12, in some embodiments, when the light distribution member 322 is a reflective cup, a prism sheet 326 is covered on an end of the reflective cup away from the light source module 310. The prism sheet 326 is configured to refract part of the light emitted by the light source module 310 that is not refracted by the reflective cup, so that this part of the light is refracted by the prism sheet and then exits toward the light-exit member 321, or exits toward the reflective member 323 on the frame 620, thereby improving the utilization rate of the light emitted by the light source module 310.

In some other embodiments, the light emitted by the light source module 310 may also be vertically incident upward into the light guide assembly 320, which is not limited by the present application.

As shown in Fig. 6, the light source module 310 includes a light source substrate 311 and a light-emitting element 312 mounted on a portion of the light source substrate 311. When the light-emitting element 312 on the light source module 310 emits light outward, the region of the light guide assembly 320 corresponding to the light-emitting element 312 on the light source substrate 311 is in a bright state (i.e., the light-exit region 301 of the side light-emitting device 300), and the region of the light guide assembly 320 not corresponding to the light-emitting element 312 on the light source substrate 311 is in a dark state (i.e., the non-light-exit region 302 of the side light-emitting device 300), so as to simulate the effect of sunlight illuminating one side edge of a window when it shines through the window into the room.

In some other embodiments, the light-emitting element 312 may also be mounted on all regions of the light source substrate 311, and by controlling the working states of the light-emitting elements 312 in different regions and changing the light source by lighting different positions, the conversion of bright and dark regions on the light-exit member may be achieved, simulating the effect of sunlight shining on the edge of a skylight at different angles in different time periods of the day, thereby achieving sunrise and sunset. In this embodiment, the frame 620 is made of a translucent or transparent material, and by controlling the different luminous colors of the light-emitting elements 312 in different regions, a rainbow effect may be formed through the frame 620, improving the visual experience of the luminaire 100.

The light that has passed through the light distribution member 322 then passes through the light-exit member 321. The light-exit member 321 can eliminate the grainy feel of the light emitted by the light source module 310, and at the same time, the light after passing through the light-exit member 321 is more uniform.

A reflective member 323 is attached to a side of the light distribution member 322 away from the light-exit member 321 or on a side of the frame 620 close to the light-exit member 321, so as to reflect the light directed to that region back, so that all the light exits toward the light-exit member 321, improving light concentration.

A light shielding member 324 is covered on a portion of the light-exit member 321 not covered by the light distribution member 322. The light shielding member 324 provided here can prevent light from leaking out from this portion of the light-exit member 321, so as to ensure that this portion of the light-exit member 321 is in a dark state, simulating the effect of real sunlight shining on the edge of a window or skylight.

In some other embodiments, the light shielding member 324 may be rotated around the light distribution member 322. When the light-emitting element 312 is mounted on all regions of the light source substrate 311, the light shielding member 324 is rotated to achieve the change of the bright and dark regions on the light-exit member 321.

The height of the light shielding member 324 may be adjusted according to actual conditions, and is adjusted by a micro-motor cooperating with an elastic member.

### Embodiment 2

As shown in Figs. 7 to 8, in this embodiment, the light emission direction of the light source module 310' intersects the light emission direction of the first light-emitting module 210. The side light-emitting device 300' includes a light-exit member 321. The light-exit member 321 is disposed between the frame 620 and the light-exit surface 201, and extends beyond the light-exit surface 201 along the extension direction of the frame 620. The light source module 310' is disposed on a side of the light-exit member 321 facing the frame 620. The light source module 310' includes an annular light source substrate 311' and a light-emitting element 312 mounted on an inner side of the substrate. The light source module 310' emits light toward the light-exit member 321, and the emitted light directly enters the light-exit member 321 from a side surface thereof.

The side light-emitting device 300' further includes a light guiding lens 325. The light guiding lens 325 is located between the light-exit member 321 and the light source module 310'. The light guiding lens 325 is connected to the inner side of the light source substrate 311' and covers the light-emitting element 312. The light emitted by the light-emitting element 312 is incident on a light incident surface of the light guiding lens 325, is refracted at the light incident surface, enters the light guiding lens 325 under the condition satisfying Snell's law, and then is refracted at a light-exit surface. After exiting from the light guiding lens 325, the light passes through the light-exit member 321 to achieve uniform light emission.

In this embodiment, the light source substrate 311' may be a flexible printed circuit board (FPC). In other embodiments, the light source substrate 311' may also be made of other materials.

Preferably, the material of the light-exit member 321 is a transparent optical material such as PMMA or PC.

In some other embodiments, the light-emitting element 312 may also be mounted on all regions of the light source substrate 311', and the light source substrate 311' may be divided into a plurality of light-emitting regions, each light-emitting region including a plurality of light-emitting elements 312. Each light-emitting region may be independently controlled for illumination. By controlling the working states of different light-emitting regions, the conversion of bright and dark regions on the light-exit member 321 may be achieved, simulating the effect of sunlight shining on the edge of a skylight at different angles in different time periods of the day.

In some other embodiments, when the light-emitting element 312 is mounted on all regions of the light source substrate 311', a light shielding member 324 may also be attached to a portion of the light-exit member 321 to prevent light from leaking out from that portion of the light-exit member 321, so that that portion of the light-exit member 321 is in a dark state, simulating the effect of real sunlight shining on the edge of a window or skylight. The light shielding member may be rotated, and by rotating the light shielding member 324, the change of the bright region on the light-exit member 321 may be achieved, simulating the effect of sunrise and sunset.

In this embodiment, the overall structure of the side light-emitting device 300' is further simplified, and the light source module 310' surrounds the outer side of the light-exit member 321, making assembly more convenient and efficient.

### Embodiment 3

In this embodiment, the structure of the side light-emitting device 300 is substantially identical to that of Embodiment 1. The side light-emitting device 300 only emits light to the side facing away from the frame 620. The light guide assembly 320 includes a light-exit member 321 and a light distribution member 322. The light source module 310 is fixedly connected to one end of the light-exit member 321. The light distribution member 322 is disposed around the outer side of the light-exit member 321, and an upper end surface of the light distribution member 322 covers the light-emitting element 312 of the light source module 310. The difference is that a fine structure 3221 is provided in the light-exit region 301, and through the fine structure 3221, light is emitted at a large angle from the region of the light-exit region 301 where the fine structure 3221 is provided.

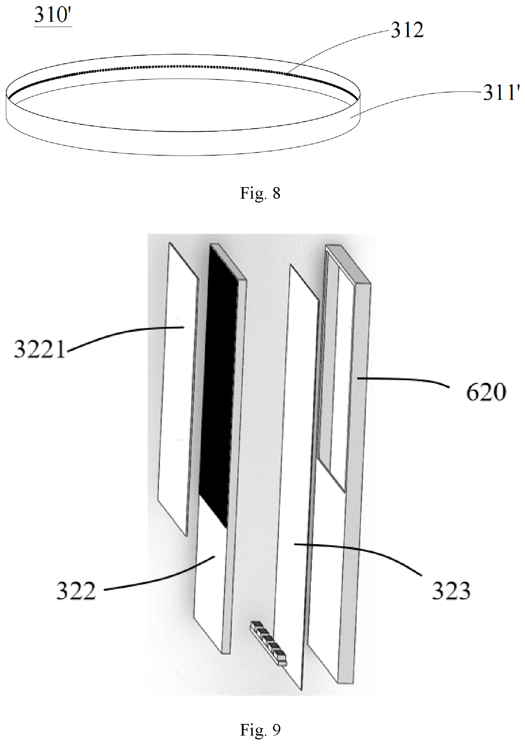

As shown in Fig. 9, the light distribution member 322 in this embodiment is a light guide plate, and the fine structure 3221 is provided on the light guide plate. The fine structure 3221 is located in a region of the light distribution member 322 away from the light source module 310. An inverse fine structure is provided on the light-exit member 321. After the light is emitted from the light-emitting element 312, the fine structure 3221 on the light distribution member 322 destroys its total reflection, so that the light is emitted at a large angle from the region of the light distribution member 322 where the fine structure 3221 is provided. The light emitted from the light distribution member 322 enters the light-exit member 321 having the inverse fine structure, and by utilizing the inverse fine structure 3221, part of the light may be emitted at a small angle onto the transparent plate 240 and reflected to form a transparent virtual image 303.

The angles of a backlight surface and a light-receiving surface of the fine structure 3221 on the light distribution member 322 are both less than 6 degrees. At the same time, the angles change with the distance between the light-emitting element 312 and the light incident side of the light distribution member 322, and the depth of the V-groove also changes. With the light-receiving surface being less than 6 degrees, after the light is incident from the light incident side, the angle of the light exiting from the light-exit surface is 165 degrees to 175 degrees, and the fine structure 3221 on the light exit side compresses the light toward the center to within 30 degrees. The emitted light of 165 to 175 degrees passes through the inverted V-shaped prism on the light-exit member 321 to achieve small-angle emission, with an exit angle of less than 10 degrees. By adjusting the angles of the light-receiving surface and the backlight surface and the depth of the V-groove, the uniformity of the light-exit surface of the light distribution member 322 may be adjusted.

Preferably, the angles of the backlight surface and the light-receiving surface of the V-shaped prism in the light distribution member 322 are both between 0.25 degrees and 0.75 degrees, and the apex angle of the inverted V-shaped prism in the light-exit member 321 is between 55 degrees and 70 degrees.

A reflective member 323 is covered on a side of the light distribution member 322 away from the light-exit member 321 to reflect the light directed to that region inside the light distribution member 322, so that the light in the light distribution member 322 all exits toward the light-exit member 321.

The luminaire 100 further includes a projection system 400. The projection system 400 is disposed between the frame 620 and the side light-emitting device 300, and is at least partially exposed from the frame 620. The projection system 400 is configured to project a simulated sunlight light spot on a wall or a ground, including shapes such as a circular light spot, an elliptical light spot, or a quadrilateral light spot, similar to the projection produced by sunlight passing through a window.

The projection system 400 includes a plurality of projection devices 410. In this embodiment, two projection devices 410 are provided. The two projection devices 410 are each movably connected to the frame 620 of the luminaire 100 via a connecting member, and the projection devices 410 are rotatable relative to the frame 620. As shown in Figs. 14-15, the projection device 410 includes a light-emitting assembly 420, a lens barrel assembly 450, and a lens assembly 430. The light-emitting assembly 420 includes an aluminum substrate 421 and lamp beads 422 mounted on the aluminum substrate 421. An aperture stop 440 is sleeved over the lamp beads 422, and the aperture stop 440 abuts against the aluminum substrate 421. The aperture stop 440 is configured to control the intensity and shape of the light beam emitted by the lamp beads 422. A first lens 431 is connected to an end of the aperture stop 440 away from the lamp beads 422, and the first lens 431 is configured to form a light spot. A first lens barrel 451 is sleeved over the outer sides of the aperture stop 440 and the first lens 431. A second lens barrel 452 is threadedly connected to an end of the first lens barrel 451 away from the first lens 431. A second lens 432 is embedded in a side of the second lens barrel 452 close to the first lens barrel 451. An end of the second lens barrel 452 away from the first lens barrel 451 is threadedly connected to a third lens barrel 453. A third lens 433 is embedded in an end of the third lens barrel 453 away from the second lens barrel 452. The second lens 432 and the third lens 433 are configured for imaging. The first lens barrel 451, the second lens barrel 452, and the third lens barrel 453 are used to adjust the focal length.

The first lens 431 and the second lens 432 are plastic lenses, and the third lens 433 is a glass lens. The plastic lenses are lighter in weight, which is beneficial for the lightweighting of the overall structure, while the glass lens ensures higher light transmittance.

In this embodiment, the lamp beads 422 are LED lamp beads. In other embodiments, other types of lamp beads may also be used, which is not limited by the present application.

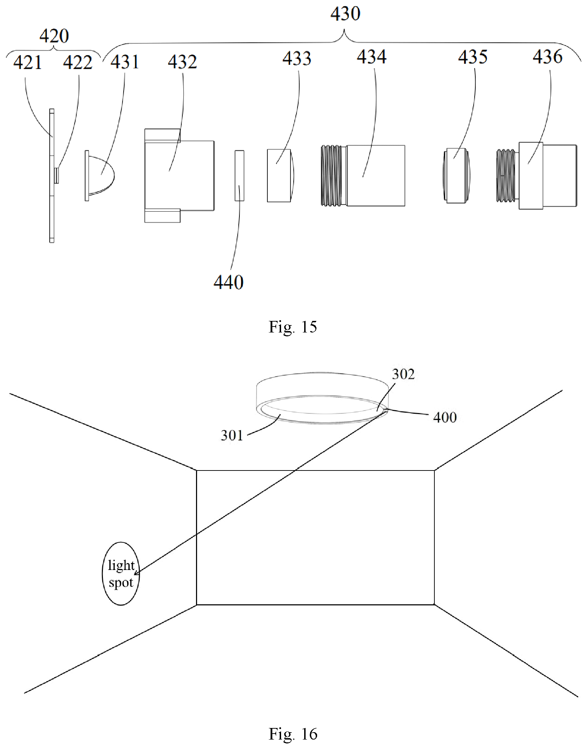

As shown in Fig. 16, the projection direction of the projection system 400 is consistent with the direction of the light-exit region 301, and a light spot is projected on the wall on one side of this region, so as to simulate the projection produced on the wall by the irradiation direction of real sunlight passing through a window.

The luminaire 100 further includes a control system. The control system controls the operation of the surface light-emitting device 200, the side light-emitting device 300, and the projection system 400 to achieve lighting effects for various scenarios.

The mounting system 500 includes a mounting bracket. The mounting bracket is fixedly connected to the bottom wall 610, and the luminaire 100 is fixedly connected to a mounting surface via the mounting bracket. In this embodiment, the mounting system 500 is of a hanger-type structure. In other embodiments, it may also be of a quick-connect structure, which is not limited by the present application.

In summary, in the luminaire 100 of the present application, the surface light-emitting device 200 can simulate effects such as blue sky, sunset, morning light, and blue sky with white clouds, and the side light-emitting device 300 simulates the effect of sunlight shining on the edge of a window, making the lighting effect of the luminaire 100 more realistic. The side light-emitting device 300 can also form a virtual image 303 on the transparent plate 240 provided therein, producing a window shadow effect similar to sunlight shining on the edge of a window or skylight, thereby creating a sense of space, depth, and layering. The projection system 400 can provide a light spot similar to the projection of sunlight onto the ground or a wall through a window or skylight, and the shape of the light spot changes according to the overall shape of the luminaire 100, enabling multi-scenario applications.

The above embodiments are only used to illustrate the technical solutions of the present application and are not limiting. Although the present application has been described in detail with reference to the preferred embodiments, those of ordinary skill in the art should understand that the technical solutions of the present application may be modified or equivalently substituted without departing from the spirit and scope of the technical solutions of the present application.

## Claims

1. A side light-emitting device, applied to a luminaire, comprising a frame (620) extending in a vertical direction, and a light source module (310) and a light-exit member (321) disposed on an inner side of the frame (620),
wherein the light source module (310) is disposed between the frame (620) and the light-exit member (321), and emits light toward the light-exit member (321) to form a light-exit region (301) on the light-exit member (321), and
the light-exit member (321) is further provided with a non-light-exit region (302) adjacent to the light-exit region (301), and the light-exit region (301) and the non-light-exit region (302) are connected in a circumferential direction to form a closed annular surface on an inner side of the light-exit member (321).

2. The side light-emitting device according to claim 1, wherein a light/shadow transition region (304) is formed between the non-light-exit region (302) and the light-exit region (301).

3. The side light-emitting device according to claim 1, wherein the light source module (310) comprises a light source substrate (311) surrounding the light-exit member (321) and a light-emitting element (312) disposed on the light source substrate (311), and
the light-emitting element (312) is disposed on a side of the light source substrate (311) facing the light-exit member (321), and the light-emitting element (312) comprises different lit regions, and by controlling the lit regions of the light-emitting element (312), the light-exit region (301) that is illuminated and the non-light-exit region (302) that is not illuminated are formed on the light-exit member (321).

4. The side light-emitting device according to claim 1, wherein the light source module (310) comprises a light source substrate (311) surrounding the light-exit member (321) and a light-emitting element (312) disposed on a portion of the light source substrate (311),
the light-emitting element (312) is configured to form the light-exit region (301) that is illuminated on the light-exit member (321), and
a region of the light source substrate (311) where the light-emitting element (312) is not provided forms the non-light-exit region (302) that is not illuminated on the light-exit member (321).

5. The side light-emitting device according to claim 1, comprising a light shielding member (324), the light shielding member (324) and the light source module (310)jointly surround the light-exit member (321),
wherein the light source module (310) is configured to form the light-exit region (301) that is illuminated on the light-exit member (321), and
the light shielding member (324) is configured to form the non-light-exit region (302) that is not illuminated on the light-exit member (321).

6. The side light-emitting device according to claim 3 or 4, wherein the light source module (310) comprises a light guiding lens (325), and the light guiding lens (325) covers the light-emitting element (312).

7. The side light-emitting device according to claim 6, wherein at least part of light emitted by the light source module (310) is projected, after exiting through the light guiding lens (325) and the light-exit member (321), onto a position of the luminaire close to the light-exit region (301).

8. The side light-emitting device according to claim 1, wherein an extension line of light emitted by the light source module (310) intersects an extension direction of the frame (620).

9. A luminaire, comprising the side light-emitting device according to any one of claims 1 to 8, and a surface light-emitting device (200),
wherein the surface light-emitting device (200) is configured to emit light outward, and the side light-emitting device is disposed to surround the surface light-emitting device (200).

10. The luminaire according to claim 9, wherein the side light-emitting device comprises a frame (620) extending in a vertical direction, and a light source module (310) and a light-exit member (321) disposed on an inner side of the frame (620), and an end of the light-exit member (321) away from the surface light-emitting device (200) is inclined toward the frame (620).
